# EUROPÄISCHE PATENTSCHRIFT

(11) **EP 0 999 960 B1**
(45) Veröffentlichungstag und Bekanntmachung des Hinweises auf die Patenterteilung: **10.11.2004**
(21) Anmeldenummer: 98946223.9
(22) Anmeldetag: 09.07.1998
(51) Int. Cl.: B60S 1/08

(54) **WISCHVORRICHTUNG FÜR SCHEIBEN VON FAHRZEUGEN**
WINDSHIELD WIPING DEVICE FOR VEHICLES
DISPOSITIF ESSUIE-GLACE POUR VEHICULES

(30) Priorität: 01.08.1997 DE 19733426
(43) Veröffentlichungstag der Anmeldung: 17.05.2000
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE1998/001915
(87) Internationale Veröffentlichungsnummer: WO 1999/006250

(56) Entgegenhaltungen:
- FR-A- 2 714 641
- US-A- 4 559 484
- US-A- 4 904 908

## Beschreibung

### Stand der Technik

Die Erfindung geht aus von einer Wischvorrichtung für Scheiben von Fahrzeugen nach dem Oberbegriff des Hauptanspruchs.

Es sind Wischanlagen für Scheiben von Fahrzeugen am Markt bekannt, die einen Antriebsmotor zum Antrieb eines Wischers aufweisen, der ein Wischblatt mit elastisch verformbarer Wischlippe und einen Tragarm für das Wischblatt hat. Der Tragarm wird durch eine Feder gegen die Scheibe geschwenkt und die Wischlippe dabei an die Scheibe gedrückt und verformt. Befindet sich der Wischer in der Parkstellung, dann wird die Wischlippe durch die intensive Einwirkung von Sonnenlicht, Wärme und Kälte stark beansprucht, so daß es zu einer länger anhaltenden oder bleibenden Verformung der Wischlippe kommt, die zu einer ungenügenden Reinigung der Scheibe führt. Weiterhin treten Geräuschprobleme durch den Slip-Stick-Effekt beim Wischen auf, da sich das verformte Wischblatt der Wischrichtung nicht mehr flexibel anpaßt.

Aus der DE-B-16 80 194 ist eine Wischanlage bekannt, die zur Vermeidung der Verformung der Wischlippe eine am Tragarm angreifende Verstelleinrichtung aufweist, die in der Parkstellung des Wischers den Tragarm entgegen der Kraft der Feder verschwenkt und dabei den Anpreßdruck der Wischlippe an die Scheibe verringert bzw. aufhebt. Die Verstelleinrichtung hat eine in die Bewegungsbahn des Tragarms hineinragende, senkrecht zur Scheibe fest abgestützte Rampe, auf die der Tragarm beim Erreichen der Parkstellung aufläuft.

Nachteilig ist hierbei, daß zusätzliche Hilfsmittel, wie beispielsweise die Rampe, verwendet werden, die eine Kostenerhöhung der Wischanlage zur Folge haben.

Nachteilig ist weiterhin, daß sich durch das Anheben des Tragarms des Wischers ein vergrößerter Bauraumbedarf, insbesondere der Bauhöhe, der Mischanlage ergibt, so daß die äußere oder innere Gestaltung des Fahrzeugs zur Aufnahme der Wischanlage verändert werden muß. Dies ist aus optischen bzw. wirtschaftlichen Gründen vom Fahrzeughersteller nicht erwünscht.

Aus der FR-A-2 714 641 ist eine Wischvorrichtung, sowie ein Verfahren für eine Wischvorrichtung bekannt, die die Merkmale der Oberbegriffe der Ansprüche 1 und 6 zeigt.

### Vorteile der Erfindung

Die erfindungsgemäße Wischvorrichtung mit den kennzeichnenden Merkmalen des Hauptanspruchs hat den Vorteil, eine länger anhaltende oder gar bleibende Verformung einer am Wischblatt ausgeformten elastisch verformbaren Wischlippe in einer Parklage des Wischers zu vermeiden, indem diese in der Parklage in unterschiedlichen Parkstellungen abgelegt wird.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist, daß die Parkstellungen der wischlippe den Schlepplagen der Wischlippe beim Hin- und Herwischen entsprechen. Die Parkstellungen der Wischlippe ergeben sich daher in einfacher Weise durch das unterschiedliche Anfahren der Parklage des Wischers durch eine Steuerung. Die Wischlippe befindet sich folglich in der Parklage in Parkstellungen, die sich direkt aus der Schlepplage der Wischlippe beim Wischen ergeben und daher ohne zusätzliche Hilfsmittel zu erhalten sind.

Vorteilhaft ist weiterhin, daß die Steuerung die zuletzt realisierte Parkstellung der Wischlippe in der Parklage erfaßt und speichert und in Abhängigkeit von dieser und in der Steuerung hinterlegten Voreinstellungen die Wischlippe in die weitere Parkstellung ablegt, so daß die Parkstellungen alternieren. Dies geschieht insbesondere bei dem folgenden Anfahren der Parklage oder bei dem Anfahren der Parklage nach einem vorgegebenen zeitlichen Abstand zum letztmaligen Alternieren.

Vorteilhaft ist weiterhin, daß als Antriebsmotor ein Rundläufermotor oder ein Umsteuermotor verwendet werden können.

Ein weiterer Vorteil ist darin zu sehen, daß bei Nichtinbetriebnahme der Wischvorrichtung während einer längeren vorgegebenen Zeitspanne von z.B. einem Monat und bei Verwendung eines Umsteuermotors, die Steuerung die Parkstellung der Wischlippe wechselt, ohne daß der Wischbetrieb hierzu eingeschaltet werden muß. So wird die Wischlippe in den regenarmen Sommermonaten ebenfalls vor bleibender Verformung bewahrt. Bei Verwendung eines Rundläufermotors ist dies lediglich bei Übergang von einer ersten in eine zweite Parkstellung möglich. Der Übergang in umgekehrter Richtung von der zweiten in die erste Parkstellung erfolgt dabei über das Auslösen eines Wischzyklusses.

### Zeichnung

Ausführungsbeispiele der Erfindung sind in der Zeichnung dargestellt und in der nachfolgenden Beschreibung näher erläutert. Es zeigen Figur 1 eine schematische Darstellung der erfindungsgemäßen Wischvorrichtung, Figur 2 Querschnitte durch ein Wischblatt mit einer ausgeformten Wischlippe in einer ersten und zweiten Parkstellung und Figur 3 der Umlegevorgang der Wischlippe über einen Umlegesteg bei einem Wechsel der Wischrichtung zum Anfahren der zweiten Parkstellung.

### Beschreibung des Ausführungsbeispieles

Die erfindungsgemäße Wischvorrichtung weist einen Motor 10 auf, der über eine gestrichelt dargestellte Verbindung 12 einen Wischer 14 antreibt. Der Wischer 14 weist ein Wischblatt 16 auf, mit dem eine Scheibe 18 im Bereich eines Wischfeldes 20 zwischen zwei Umkehrlagen U1, U2 gewischt wird. Dazu wird der Motor 10 durch eine Steuerung 22 in unterschiedlichen Wischbetrieben angesteuert, die wiederum durch einen Bedienschalter 24 manuell vorgebbar sind. Ebenso ist die Ansteuerung des Wischbetriebs aufgrund von Signalen eines Regensensors denkbar.

Der Wischer 14 wird in eine Parklage P verfahren, wenn der Wischbetrieb des Wischers 14 ausgeschaltet oder bei einem Intervallbetrieb unterbrochen wird. Bei letzterem wird der Wischer 14 zwischen den einzelnen Wischzyklen des Intervallbetriebs in der Parklage P geparkt. Die Parklage P befindet sich üblicherweise am unteren Rand der Scheibe 18 nahe der Scheibeneinfassung 30.

Als Motor 10 wird ein Umsteuermotor verwendet, der beispielsweise über eine nicht dargestellte drehbare Motorkurbel und ein Pendelgetriebe als Verbindung 12 den Wischer 14 pendelnd antreibt. Durch Variieren des Drehwinkels der Motorkurbel werden unterschiedliche Parkstellungen in der Parklage P realisiert. Eine weitere Alternative der Gestaltung der Verbindung 12 besteht darin, den Wischer 14 direkt auf der Abtriebswelle des Motors 10 anzubringen, so daß durch Variieren des Drehwinkels der Motorabtriebswelle die Parkstellungen in der Parklage P angefahren werden.

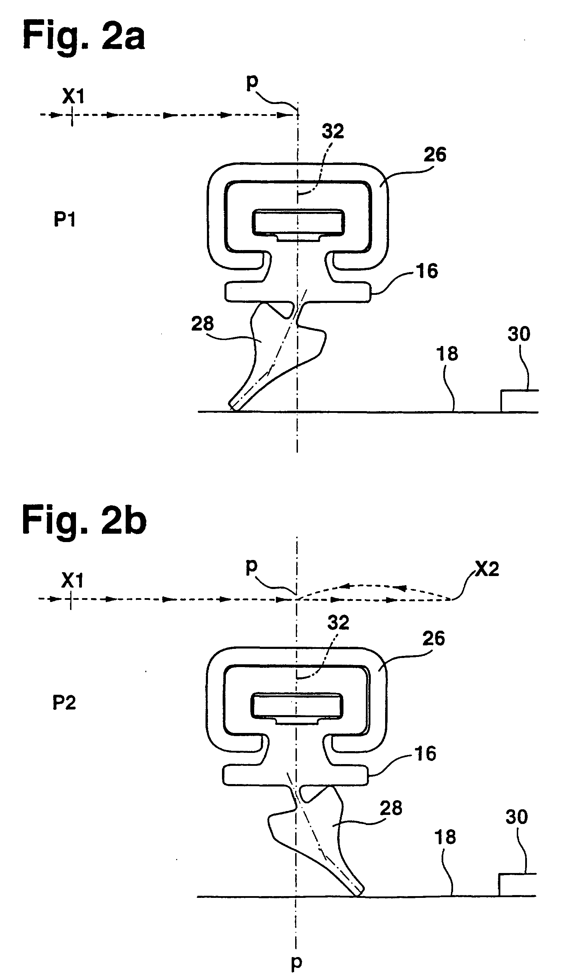

Figur 2a zeigt eine erste, Figur 2b zeigt eine zweite Parkstellung P1, P2 des Wischblatts 16 in der Parklage P. Das Wischblatt 16 ist in einer Halterung 26 am Wischer 14 befestigt. Am Wischblatt 16 ausgeformt ist eine Wischlippe 28. Die Wischlippe 28 ist in der ersten Parkstellung P1 von der Scheibeneinfassung 30 weggerichtet, in der zweiten Parkstellung P2 zu dieser hingerichtet.

Eine Symmetrieachse 32 des Wischblatts 16 im unbelasteten Zustand ist ebenfalls dargestellt. Im Folgenden wird die Position des Wischblatts 16 durch die Symmetrieachse 32 definiert. Beispielsweise befindet sich der Wischer 14 in der Parklage P, wenn die Symmetrieachse 32 und die Parklage P deckungsgleich sind.

Mit gestrichelten Pfeilen ist die Bewegungsrichtung des Wischblatts 16 bis zur Ablage in der Parklage P in der ersten bzw. zweiten Parkstellung P1, P2 veranschaulicht. Eingezeichnet sind ebenfalls Positionen X1 bzw. X1 und X2, die spezifische Positionen des Wischblatts 16 beim Anfahren der ersten bzw. zweiten Parkstellung P1, P2 kennzeichnen.

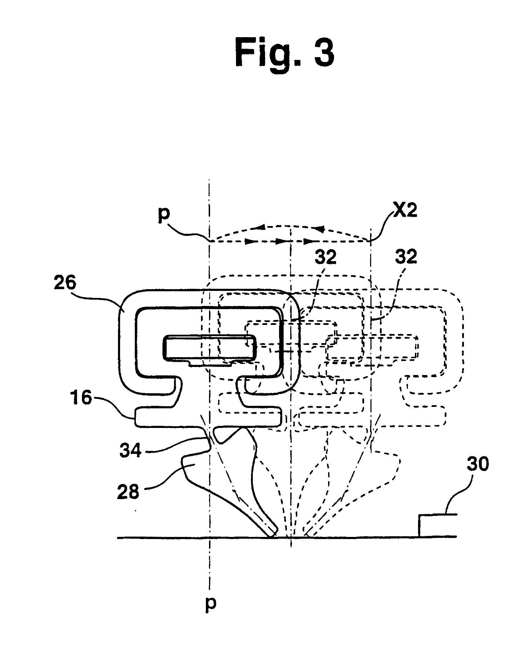

In Figur 3 wird der Umlegevorgang des Wischblatts 16 zum Anfahren der zweiten Parkstellung P2 dargestellt. Die Wischlippe 28 ist über einen Umlegesteg 34 mit dem Wischblatt 16 verbunden.

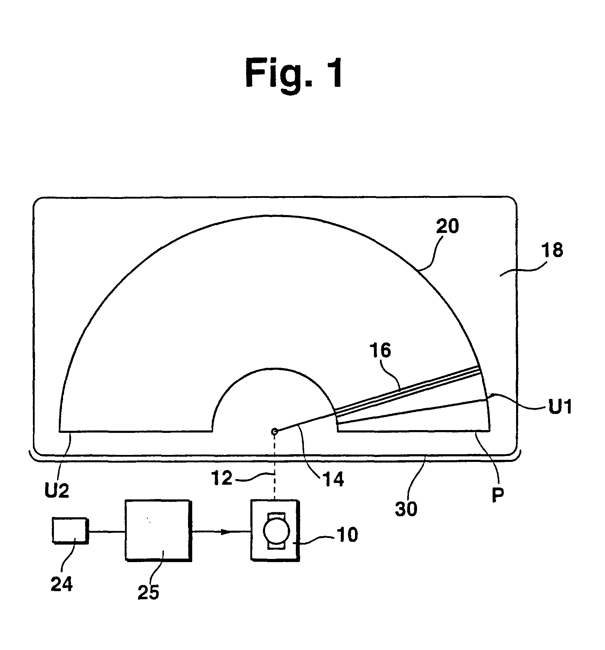

Die Funktionsweise der erfindungsgemäßen Vorrichtung nach Figur 1 wird im folgenden gemäß Figur 2 und 3 beschrieben.

Die erfindungsgemäße Wischvorrichtung für Scheiben 18 von Fahrzeugen, insbesondere Kraftfahrzeugen, wischt die Scheibe 18 beispielsweise in einem Dauerwischbetrieb. Nach dem Betätigen des Bedienschalters 24 zum Abschalten des Wischbetriebs verfährt die Steuerung 22 das Wischblatt 16 in die Parklage P.

Gemäß Figur 2a wird nun das Anfahren der ersten Parkstellung P1 beschrieben. Die Position X1 kennzeichnet eine beliebige Position des Wischblatts 16 innerhalb des Wischfeldes 20 vor der Parklage P. Während des Wischens ist die Wischlippe 28 entgegen der Wischrichtung abgeknickt. Bewegt sich beispielsweise das Wischblatt 16 nach rechts, dann ist die Wischlippe 28 nach links abgeknickt. Diese Lage der Wischlippe 28 wird im Folgenden als erste Schlepplage bezeichnet, da sie also jeweils vom Wischblatt 16 mitgeschleppt wird.

Erreicht das Wischblatt 16 die Parklage P, dann wird der Motor 10 ausgeschaltet und die Wischlippe 28 befindet sich in der ersten Parkstellung P1, die der ersten Schlepplage der Wischlippe 28 entspricht.

Gemäß Figur 2b wird das Anfahren der zweiten Parkstellung P2 erläutert. Ausgehend von der Position X1 wird das Wischblatt 16 über die Parklage P bis zur Position X2 verfahren. Hier wird der Motor 10 durch die Steuerung 22 reversiert, so daß die Wischrichtung wechselt und das Wischblatt 16 sich wieder auf die Parklage P zu bewegt. Dabei wird die Wischlippe 28 gemäß Figur 3 von der ersten Schlepplage über den Umlegesteg 34 in die zweite Schlepplage umgelegt. Bei Erreichen der Parklage P wird der Motor 10 durch die Steuerung 22 ausgeschaltet und die Wischlippe 28 befindet sich in der zweiten Parkstellung P2.

In Figur 3 ist ersichtlich, daß zum Anfahren der zweiten Parkstellung P2 die Parklage P soweit überfahren werden muß, daß die Wischlippe 28 problemlos über den Umlegesteg 34 in die zweite Schlepplage kippen kann. Der Abstand zwischen Position X2 und der Parklage P ergibt sich also folglich aus der Geometrie der Wischlippe 28 und ihrem Kippwinkel bezüglich der Symmetrieachse 32 in der Schlepplage und wird vorgegeben.

Die alternierende Ablage der Wischlippe 28 in die beiden Parkstellungen P1, P2 wird durch die Steuerung 22 realisiert. Diese weist einen nichtflüchtigen Speicher auf, in dem Voreinstellungen abgelegt sind und in dem jeweils die zuletzt eingenommene Parkstellung P1, P2 gespeichert wird. Gemäß der Voreinstellungen wird beim abermaligen Abschalten des Wischbetriebs oder Parken des Wischers 14 in den Intervallpausen des Intervallbetriebs die Wischlippe 28 in diese oder die weitere Parkstellung P2, P1 abgelegt. Vorzugsweise alternieren die Parkstellungen P1, P2 nach jedem Abschalten des Wischbetriebs mittels des Bedienschalters 24.

Die Steuerung 22 weist zusätzlich einen Zeitgeber auf, so daß die Parkstellung P1, P2 in einem wöchentlichen, monatlichen oder beliebigen anderen Rhythmus wechselt.

Um auch bei Nichtinbetriebnahme der Wischvorrichtung eine unerwünschte Verformung der Wischlippe 28 zu vermeiden, wechselt die Steuerung 22 die Parkstellung P1, P2 der Wischlippe 28 nach einer vorgegebenen Zeitspanne, ohne daß der Wischbetrieb hierzu eingeschaltet wird. Diese vorgegebene Zeitspanne beträgt beispielsweise einen Monat.

Dies geschieht derart, daß zum Umlegen der Wischlippe 28 von der ersten Parkstellung P1 in die zweite Parkstellung P2 das Wischblatt 16 von der Steuerung 22 einen ersten vorgegebenen Abstand bis zur Position X2 in Richtung der Scheibeneinfassung 30 und anschließend wieder zurück zur Parklage P verfahren wird. Für den umgekehrten Fall, dem Umlegen der Wischlippe 28 von der zweiten Parkstellung P2 in die erste Parkstellung P1, wird das Wischblatt 16 durch die Steuerung 22 einen zweiten vorgegebenen Abstand in Richtung des Wischfeldes 20 und wieder zurück zur Parklage P verfahren. Der zweite vorgegebene Abstand entspricht betragsmäßig mindestens dem ersten und kann gegebenenfalls bis zur ersten Umkehrlage U1 reichen. Bei Verwendung eines Rundläufermotors, der nicht reversierbar ist, wird in diesem Fall durch die Steuerung ein Wischzyklus ausgelöst, so daß das Wischblatt 16 bis zur zweiten Umkehlage U2 verfahren wird.

Es ist ebenfalls möglich, die erste und zweite Parkstellung P1, P2 mit einer an sich bekannten erweiterten Parklage oder versenkten Parklage zu kombinieren, in die der Wischer 14 u.a. zur Verringerung des Luftwiderstands des Fahrzeugs abgelegt wird.

In einem alternativen Ausführungsbeispiel wird als Motor 10 ein Rundläufermotor verwendet. Der Strecklage des Getriebes ist dann die Position X2 zugeordnet. Die beiden Parkstellungen P1, P2 in der Parklage P werden dabei derart realisiert, daß der Wischer 14 kurz vor bzw. nach der Strecklage des Getriebes geparkt wird. Als Getriebe kann hierbei ein beliebiges Getriebe verwendet werden.

## Patentansprüche

1. Wischvorrichtung für Scheiben (18) von Fahrzeugen, mit einem Motor (10) und mindestens einem pendelnd über die Scheibe (18) bewegten Wischer (14) mit einem Wischblatt (16), das in eine Parklage (P) verfahrbar ist, und einer an dieser ausgeformten elastisch verformbaren Wischlippe (28) sowie einer den Motor (10) steuernden Steuerung (22); wobei die Wischlippe (28) in der Parklage (P) in unterschiedlichen Parkstellungen (P1, P2) ablegbar ist, **dadurch gekennzeichnet, daß** die Steuerung (22) einen Zeitgeber aufweist, so daß die Parkstellungen (P1, P2) der Wischlippe (28) in der Parklage (P) in zeitlichen Abständen, z.B. täglich, wöchentlich oder monatlich, alternierend ansteuerbar sind, insbesondere dann, wenn in einer vorgebbaren Zeitspanne von z.B. einem Monat die Wischvorrichtung nicht in Betrieb genommen wurde.

2. Vorrichtung nach Anspruch 1, **dadurch gekennzeichnet, daß** die Wischlippe (28) von der Steuerung (22) in der Parklage (P) alternierend in eine erste oder zweite Parkstellung (P1, P2) ablegbar ist, die einer ersten oder zweiten Schlepplage der Wischlippe (28) entsprechen, wobei die Wischlippe (28) bei einer Richtungsänderung des Wischers (14) von einer Schlepplage in die andere kippt.

3. Vorrichtung nach Anspruch 1 oder 2, **dadurch gekennzeichnet, daß** die Steuerung (22) einen Speicher aufweist, in der die Parkstellung (P1, P2) der Wischlippe (28) bei dem letztmaligen Anfahren der Parklage (P) gespeichert wird, und daß in Abhängigkeit von den in der Steuerung (22) hinterlegten Voreinstellungen die Wischlippe (28) beim nächsten Anfahren der Parklage (P) in diese oder in die zweite Parkstellung (P1, P2) abzulegen ist.

4. Vorrichtung nach Anspruch 3, **dadurch gekennzeichnet, daß** die Parkstellungen (P1, P2) der Wischlippe (28) in der Parklage (P) bei jedem Anfahren der Parklage (P), insbesondere nach jedem Abschalten des Wischbetriebs, alternieren.

5. Vorrichtung nach Anspruch 1 oder 2, **dadurch gekennzeichnet, daß** als Motor (10) ein Rundläufermotor oder ein Umsteuermotor zu verwenden ist.

6. Verfahren für eine Wischvorrichtung für Scheiben (18) von Fahrzeugen, mit einem Motor (10) und mindestens einem pendelnd über die Scheibe (18) bewegten Wischer (14) mit einem Wischblatt (16), das in eine Parklage (P) verfahrbar ist, und einer am Wischblatt (16) ausgeformten elastisch verformbaren Wischlippe (28) sowie einer den Motor (10) steuernden Steuerung (22), wobei die Wischlippe (28) von der Steuerung (22) in der Parklage (P) alternierend in eine erste oder zweite Parkstellung (P1, P2) abgelegt wird, die einer ersten und zweiten Schlepplage entsprechen und die Steuerung (22) in zeitlichen Abständen die Parkstellung (P1,P2) der Wischlippe (28) ändert, **dadurch gekennzeichnet, daß** die Steuerung (22) zusätzlich einen Zeitgeber aufweist, so daß die Parkstellung (P1,P2) der Wischlippe (28) in zeitlichen Abständen geändert wird, wenn in einer vorgebbaren Zeitspanne von z.B. einem Monat die Wischvorrichtung nicht in Betrieb genommen wurde.

7. Verfahren nach Anspruch 6, **dadurch gekennzeichnet, daß** die Wischlippe (28) in die erste Parkstellung (P1) durch Anfahren der Parklage (P) und Ausschalten des Motors (10) bei Erreichen der Parklage (P) durch das Wischblatt (16) abgelegt wird.

8. Verfahren nach Anspruch 6, **dadurch gekennzeichnet, daß** die Wischlippe (28) in die zweite Parkstellung (P2) durch Anfahren der Parklage (P), Überwischen der Parklage (P), Reversieren der Wischrichtung, insbesondere nach einem vorgegebenen Abstand zur Parklage (P), und Ausschalten des Motors (10) bei Erreichen der Parklage (P) durch das Wischblatt (16) abgelegt wird.

9. Verfahren nach Anspruch 6, **dadurch gekennzeichnet, daß** zum Umlegen der Wischlippe (28) von der ersten Parkstellung (P1) in die zweite Parkstellung (P2) das Wischblatt (16) von der Steuerung (22) einen vorgegebenen Abstand in Richtung der Scheibeneinfassung (30), insbesondere bis zur Position (X2), und zurück zur Parklage (P) verfahren wird, beziehungsweise daß zum Umlegen der Wischlippe (28) von der zweiten Parkstellung (P2) in die erste Parkstellung (P1) das Wischblatt (16) durch die Steuerung (22) einen vorgegebenen Abstand in Richtung des Wischfeldes (20), insbesondere bis zur ersten oder zweiten Umkehrlage (U1, U2), und zurück zur Parklage (P) verfahren wird.

## Claims

1. Device for wiping windscreens (18) of vehicles, having a motor (10) and at least one wiper (14) which is moved in an oscillating fashion over the windscreen (18) and has a wiping blade (16) which can be moved into a parked position (P), and a wiping lip (28) which is elastically deformable and is formed on said wiping blade (16), as well as a controller (22) which controls the motor (10), it being possible to place the wiping lip (28) in the parked position (P) in different parked locations (P1, P2), **characterized in that** the controller (22) has a timer so that the parked locations (P1, P2) of the wiping lip (28) in the parked position (P) can be adopted alternately at time intervals, for example daily, weekly, monthly, in particular if the wiper device has not been activated in a predefinable time period of, for example, one month.

2. Device according to Claim 1, **characterized in that** the wiping lip (28) can be placed via the controller (22) in the parked position (P) alternately in a first or second parked location (P1, P2) which correspond to a first or second dragging position of the wiping lip (28), the wiping lip (28) flipping from one dragging position into the other when there is a change in direction of the wiper (14).

3. Device according to Claim 1 or 2, **characterized in that** the controller (22) has a memory in which the parked location (P1, P2) of the wiping lip (28) is stored when the parked position (P) is last adopted, and **in that** when the wiping lip (28) adopts the parked position (P) next, it is to be placed in said position or in the second parked location (P1, P2) as a function of the presettings placed in the controller (22).

4. Device according to Claim 3, **characterized in that** the parked locations (P1, P2) of the wiping lip (28) in the parked position (P) alternate whenever the parked position (P) is adopted, in particular after each time the wiping operation has been switched off.

5. Device according to Claim 1 or 2, **characterized in that** a round-rotor motor or a reversing motor can be used as the motor (10).

6. Method for a device for wiping windscreens (18) of vehicles, having a motor (10) and at least one wiper (14) which is moved in an oscillating fashion over the windscreen (18) and has a wiping blade (16) which can be moved into a parked position (P), and a wiping lip (28) which is elastically deformable and is formed on said wiping blade (16), as well as a controller (22) which controls the motor (10), the wiping lip (28) being placed in the parked position (P) alternately in a first or second parked location (P1, P2) by the controller (22), said parked locations (P1, P2) corresponding to a first and second dragging position and the controller (22) changing the parked location (P1, P2) of the wiping lip (28) at time intervals, **characterized in that** the controller (22) also has a timer so that the parked location (P1, P2) of the wiping lip (28) is changed at time intervals when the wiper device has not been activated in a predefinable time period of, for example, one month.

7. Method according to Claim 6, **characterized in that** the wiping lip (28) is placed in the first parked location (P1) by adopting the parked position (P) and switching off the motor (10) when the parked position (P) is reached by the wiping blade (16).

8. Method according to Claim 6, **characterized in that** the wiping lip (28) is placed in the second parked location (P2) by adopting the parked position (P), wiping over the parked position (P), reversing the wiping direction, in particular after a predefined distance from the parked position (P), and switching off the motor (10) when the parked position (P) is reached by the wiping blade (16).

9. Method according to Claim 6, **characterized in that**, in order to move the wiping lip (28) over from the first parked location (P1) into the second parked location (P2), the wiping blade (16) is moved by the controller (22) for a predefined distance in the direction of the windscreen border (30), in particular as far as the position (X2), and back to the parked position (P), or **in that**, in order to move the wiping lip (28) over from the second parked position (P2) into the first parked position (P1), the wiping blade (16) is moved by the controller (22) for a predefined distance in the direction of the wiping field (20), in particular as far as the first or second reversal position (Ul, U2), and back to the parked position (P).

## Revendications

1. Dispositif d'essuyage pour les vitres (18) d'un véhicule comportant un moteur (10) et au moins un balai d'essuie glace (14) équipé d'une lame d'essuyage (16) déplacée sur la vitre (18) suivant un mouvement pendulaire, et qui peut être conduit dans une position de rangement (P), la lame comportant une lèvre d'essuyage (28) déformable élastiquement, formée sur la lame, ainsi qu'une commande (22) pour commander le moteur (10) ;
la lèvre d'essuyage (28) pouvant être positionnée dans différentes dispositions (P1, P2) en position de rangement (P),
**caractérisé en ce que**
la commande (22) comporte une horloge pour commander de façon alternée les dispositions de rangement (P1, P2) de la lèvre d'essuyage (28) dans la position de rangement (P), à des intervalles par exemple quotidiens, hebdomadaires ou mensuels, notamment si pendant une période prédéterminée par exemple d'un mois, le dispositif d'essuyage n'a pas été mis en fonctionnement.

2. Dispositif selon la revendication 1,
**caractérisé en ce que**
la lèvre d'essuyage (28) est placée par la commande (22) dans la position de rangement (P), alternativement dans une première et dans une seconde situation de rangement (P1, P2) correspondant à une première et à une seconde position de traction de la lèvre d'essuyage (28), cette lèvre (28) basculant d'une position de traction à l'autre lors d'un changement de direction de l'essuie glace (14).

3. Dispositif selon la revendication 1 ou 2,
**caractérisé en ce que**
la commande (22) comporte une mémoire qui enregistre la situation de rangement (P1, P2) de la lèvre d'essuyage (28) lors de la dernière arrivée en position de rangement (P) ; et
en fonction des préréglages enregistrés dans la commande (22), lors de la prochaine arrivée en position de rangement (P), la lèvre d'essuyage (28) est mise dans cette disposition ou dans la seconde disposition de rangement (P1, P2).

4. Dispositif selon la revendication 3,
**caractérisé en ce que**
les dispositions de rangement (P1, P2) de la lèvre d'essuyage (28) alterne dans la position de rangement (P) à chaque arrivée dans cette position de rangement (P) notamment après chaque fonctionnement d'essuyage.

5. Dispositif selon la revendication 1 ou 2,
**caractérisé en ce que**
le moteur (10) est un moteur à rotor tournant ou un moteur à commutation de mouvement.

6. Procédé de mise en oeuvre d'un dispositif d'essuyage de vitres (18) de véhicule comprenant un moteur (10) et au moins un balai d'essuie glace (14) équipé d'une lame d'essuyage (16) que l'on déplace suivant un mouvement alterné par-dessus la vitre (18), cette lame étant conduite dans une position de rangement (P) et elle comporte une lèvre d'essuyage (28) déformable élastiquement, réalisée avec la lame d'essuyage (16) ainsi qu'une commande (22) commandant le moteur (10) ;
la lèvre d'essuyage (28) étant placée par la commande (22) en position de rangement (P), alternativement dans une première et dans une seconde situation de rangement (P1, P2) correspondant à une première et à une seconde position tirée et la commande (22) change la situation de rangement (P1, P2) de la lèvre d'essuyage (28) à des intervalles de temps,
**caractérisé en ce que**
la commande (22) comporte en outre une horloge pour modifier la situation de rangement (P1, P2) de la lèvre d'essuyage (28) à des intervalles de temps si pendant une période prédéterminée par exemple d'un mois, le dispositif d'essuyage n'a pas été mis en oeuvre.

7. Procédé selon la revendication 6,
**caractérisé en ce que**
la lèvre d'essuyage (28) est placée dans la première situation de rangement (P1) par l'arrivée en position de rangement (P) et coupure du moteur (10) lorsque la lame d'essuyage (16) arrive dans la position de rangement (P).

8. Procédé selon la revendication 6,
**caractérisé en ce que**
la lèvre d'essuyage (28) est mise dans sa seconde position de rangement (P2) par l'arrivée dans la position de rangement (P), passage sur la position de rangement (P), inversion du sens d'essuyage notamment à une distance prédéterminée de la position de rangement (P) et coupure du moteur (10) lorsque la lame d'essuyage (16) arrive dans la position de rangement (P).

9. Procédé selon la revendication 6,
**caractérisé en ce que**
pour basculer la lèvre d'essuyage (28) de sa première position de rangement (P1) dans sa seconde position de rangement (P2), le balai (16) est déplacé par la commande (22) d'une distance prédéterminée en direction de l'encadrement (30) de la vitre notamment jusqu'à une position (X2) et en retour vers la position de rangement (P) ou, pour basculer la lèvre (28) de la seconde position de rangement (P2) dans la première position de rangement (P1), le balai (16) est déplacé par la commande (22) d'une distance prédéterminée en direction du champ d'essuyage (20) notamment jusqu'à la première ou la seconde position d'inversion (U1, U2) et en retour vers la position de rangement (P).
